# EUROPEAN PATENT APPLICATION

(11) **EP 4 668 094 A1**
(43) Date of publication of application: **24.12.2025**
(21) Application number: 24855254.9
(22) Date of filing: 13.03.2024
(51) Int. Cl.: G06F 3/14

(54) **VIRTUAL SCREEN PROCESSING METHOD AND ELECTRONIC DEVICE**

(30) Priority: 18.08.2023 CN 202311051429
(71) Applicant: Honor Device Co., Ltd., Shenzhen, Guangdong 518040 (CN)
(72) Inventor: LV, Yang, Shenzhen, Guangdong 518040 (CN)
(74) Representative: Thun, Clemens
(86) International application number: PCT/CN2024/081379
(87) International publication number: WO 2025/039523

(57) **Abstract**

This application relates to the technical field of terminals, and provides a processing method for a virtual display and an electronic device. The method includes: communicating with an application process by using a communication thread in an image processing process when the image processing process performs GI composition of a first frame, to obtain a communication result; and sending a composite GI to the virtual display created by the application process when the communication result is normal, and deleting a virtual display object when the communication result is abnormal. In this case, a task thread of the image processing process is prevented from being blocked when the application process does not respond in time or the communication with the image processing process is abnormal, so that impact from the abnormality is controlled in the communication thread without spreading to other task threads. In this application, the communication thread is separated from an image composition thread, and the communication thread is used to communicate with the application process, thereby resolving, to a specific extent, a freezing screen problem of a display interface of an electronic device, and improving device stability and user experience.

## Description

This application claims priority to Chinese Patent Application No. 202311051429.9, filed with the China National Intellectual Property Administration on August 18, 2023 and entitled "PROCESSING METHOD FOR VIRTUAL DISPLAY AND ELECTRONIC DEVICE", which is incorporated herein by reference in its entirety.

### TECHNICAL FIELD

This application relates to the technical field of terminals, and in particular, to a processing method for a virtual display and an electronic device.

### BACKGROUND

An application (Application, App) needs to create a virtual display, composites a graphic interface (Graphic Interface, GI) on the virtual display after creation is completed, and sends a composite GI to the virtual display for displaying during implementation of a function such as screen recording or screen projection of an electronic device. An App may also be referred to as an application process.

In a related solution, an image composition thread in an image processing process, for example, an image composition thread of a SurfaceFlinger process, is used to composite the GI on the virtual display and the GI on a display interface of the electronic device. However, the display interface of the electronic device is frequently subjected to a freezing screen state. In the freezing screen state, the display interface is unresponsive to a trigger operation of a user, resulting in poor user experience.

### SUMMARY

This application provides a processing method for a virtual display and an electronic device, to resolve, to a specific extent, a freezing screen state on a display interface of an electronic device to some extent, and improving user experience.

To achieve the foregoing objective, this application adopts the following technical solutions:

According to a first aspect, this application provides a processing method for a virtual display, specifically including:
communicating with an application process by using a communication thread in an image processing process when the image processing process performs GI composition of a first frame, to obtain a communication result; and sending a composite GI to the application process for displaying on a virtual display created by the application process when the communication result is normal, and deleting a virtual display object when the communication result is abnormal. In this case, a task thread of the image processing process is prevented from being blocked when the application process does not respond in time or the communication with the image processing process is abnormal, so that impact from the abnormality is controlled in the communication thread without spreading to other task threads. The communication thread is only configured to perform cross-process communication with the application process, and is not configured to perform GI composition of a display interface of an electronic device. Therefore, even if the communication thread is blocked, the GI composition of the display interface of the electronic device is not affected. However, the GI composition of the display interface of the electronic device is related to freezing screen of the display interface. When the GI composition of the display interface of the electronic device is normal, the display interface does not enter a freezing screen state. However, when the image processing process communicates with the application process by using a communication part of an image composition thread, when the application process does not respond in time, or the communication with the image processing process is abnormal, the communication part of the image processing process is blocked, and other threads of the image processing process are blocked, resulting in a failure of the GI composition of the display interface of the electronic device and GI composition of the virtual display. Based on the above, in this application, the communication thread in the image processing process is used to communicate with the application process, thereby effectively reducing impact from abnormality of a single application process on an underlying image processing process, resolving, to a specific extent, problems such as screen freezing of the display interface of the electronic device, and improving device stability and user experience.

In a possible implementation, an internal memory obtaining message is sent to the application process by using the communication thread when an image composition thread in the image processing process sends a first event signal to the communication thread, where the internal memory obtaining message is used to determine an internal memory configured to buffer the composite GI; it is determined that the communication result is the normal communication when the communication thread receives an internal memory parameter sent by the application process within the preset time and sends a first result signal to the image composition thread, where the internal memory parameter is used to specify the internal memory; and it is determined that the communication result is the abnormal communication when the communication thread does not receive the internal memory parameter sent by the application process within the preset time. In this way, separation of the image composition thread from the communication thread is achieved, thereby avoiding a problem of screen freezing caused by a GI composition failure of the display interface of the electronic device as a result of blocking of the image composition thread resulted from blocking of the communication thread.

In another possible implementation, the internal memory obtaining message is DequeueBuffer() when the first event signal is an event signal with a mark DequeueBuffer. The DequeueBuffer() specifies an internal memory obtaining sequence. A target GraphicBuffer (referred to as a Buffer for short below) is preferentially determined from a slot bound to the internal memory. In this way, determining efficiency can be improved.

Optionally, the internal memory obtaining message further includes but is not limited to internal memory size information and pixel format information. The App may determine the target Buffer from the Buffer Queue based on a width, a height, and a pixel format specified by the first event signal. In still another implementation, the composite GI is buffered in the internal memory and a second event signal is sent to the communication thread when the communication result is the normal communication; a return message is sent to the application process by using the communication thread in response to the communication thread receiving the second event signal; and it is determined to buffer the composite GI in the internal memory after the communication thread receives a return success message sent by the application process and sends a second result signal to the image composition thread.

Optionally, the virtual display object is destroyed when it is determined that the communication thread is terminated after the GI is composited by the image processing process.

Optionally, the second event signal is an event signal of a QueueBuffer, and the return message is QueueBuffer().

Optionally, a termination thread is constructed and GI composition of a second frame is started when abnormal communication occurs, where the termination thread is configured to terminate the communication thread, and the second frame is a next frame of the first frame; it is determined whether the communication thread is terminated; and GI composition of a third frame is started when it is determined that the communication thread is not terminated, it is redetermined whether the communication thread is terminated, where the third frame is a next frame of the second frame, the operation is repeated until it is determined that the communication thread is terminated, and the virtual display object is deleted. In this way, the GI composition of the display interface of the electronic device can still run normally when abnormal communication occurs or the App does not respond in time.

Optionally, it is determined that the communication thread is terminated when a failure instruction of the internal memory obtaining instruction sent by the application process is received by using the communication thread when a system service process sends a closing instruction to the application process to close the application process in response to detecting that the application process has failed.

Optionally, the communication thread is created in the image processing process when the application process creates the virtual display, and the virtual display object is created, to maintain a correspondence between the virtual display and the communication thread.

Optionally, the communication thread is terminated, and the virtual display object is destroyed. The virtual display is created when the virtual display is needed, and the virtual display is deleted when the virtual display is not needed, which can prevent the virtual display from affecting other functions.

Optionally, the composite GI is sent to the application process after the application process turns to a screen recording process, so that the application process encodes the composite GI into a video format for storage; and the composite GI is sent to the application process after the application process turns to a screen projection process, so that the application process sends the composite GI to a screen projection device for displaying.

Optionally, communication is performed with the application process by using the communication thread based on a Binder mechanism. Compared with other transmission mechanisms, the Binder mechanism needs to be copied only once, which is faster, more secure, and easier to use.

According to a second aspect, an electronic device is provided. The electronic device includes a memory and a processor. The memory is coupled to the processor. The memory has a program stored therein. The program, when executed by the processor, causes the electronic device to perform the method according to any implementation of the first aspect.

### BRIEF DESCRIPTION OF DRAWINGS

FIG. 1 is a schematic diagram of an internal structure of a BufferQueueCore;
FIG. 2A is a schematic diagram of an application scenario of a virtual display according to an embodiment of this application;
FIG. 2B is a schematic diagram of an application scenario of another virtual display according to an embodiment of this application;
FIG. 3 is an interaction diagram of a method for compositing a virtual display in a related solution;
FIG. 4 is a schematic principle diagram of blocking of an image processing process in a related solution;
FIG. 5 is a schematic structural diagram of an electronic device 100 according to an embodiment of this application;
FIG. 6 is a schematic structural diagram of software of an electronic device according to an embodiment of this application;
FIG. 7 is a flowchart of a processing method for a virtual display according to an embodiment of this application;
FIG. 8 is an interaction diagram of a method for compositing a virtual display according to an embodiment of this application; and
FIG. 9 is an interaction diagram of a virtual display composition fault according to an embodiment of this application.

### DESCRIPTION OF EMBODIMENTS

Terms "first", "second", "third", and the like in the specification, claims, and drawings of this application are used to distinguish between different objects rather than define a specific order.

In this embodiment of this application, a term such as "in an example" or "for example" is used to represent giving an example, an illustration, or a description. Any embodiment or design solution described as "in an example" or "for example" in this embodiment of this application should not be explained as being preferable or having more advantages than another embodiment or design solution. Exactly, the term such as "in an example" or "for example" is intended to present a related concept in a specific manner.

Technical terms involved in this embodiment of this application are described below.

Buffer queue (BufferQueue): It is formed by three parts, i.e., a BufferQueueCore, which is used to maintain a basic data structure of the BufferQueue; and a BufferQueueProducer and a BufferQueueConsumer, which are used to provide a basic interface for operating the BufferQueue.

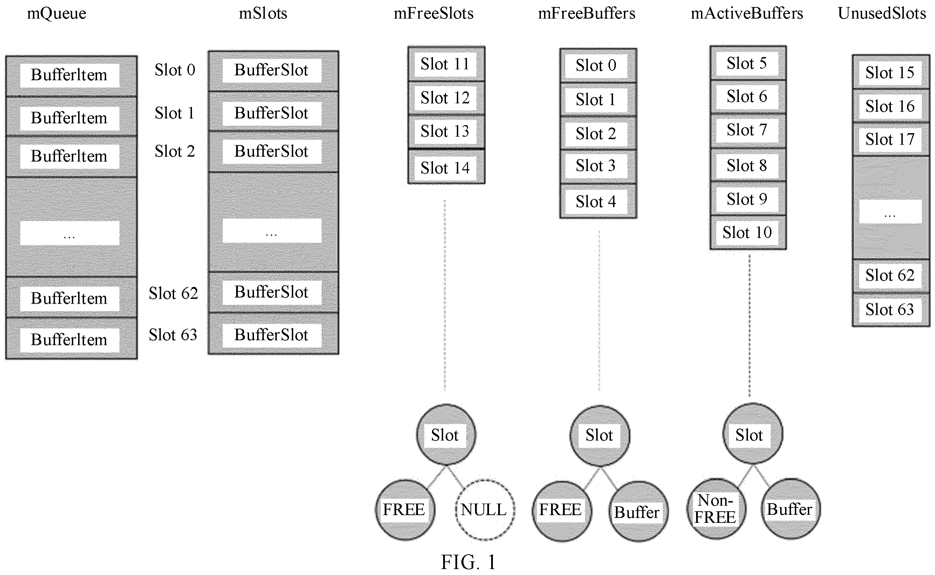

FIG. 1 is a schematic diagram of an internal structure of a BufferQueueCore. The BufferQueueCore includes five queues, i.e., mQueue, mSlots, mFreeSlots, mFreeBuffers, and mActiveBuffers.

The mQueue is used to store a first input first output (First Input First Output, FIFO) queue of a BufferItem.

mSlots is structural diagram data of a BufferSlot, and has an array length of 64, i.e., a slot 0 to a slot 64. The array of the BufferSlot is replaced with a slot parameter below.

A slot state of the mFreeSlots is FREE, and no Buffer is bound to the mFreeSlots. In other words, the slot has a FREE state and a NULL state. The FREE state represents that a current owner of the BufferSlot is the BufferQueue, and the current state may be taken out from the queue by the BufferQueueProducer by invoking a Dequeue method. The NULL state represents that no Buffer is bound to the slot.

The slot state of the mFreeBuffers is FREE, and the Buffer is bound to the mFreeBuffers. In other words, the slot state is the FREE and buffer state, where the buffer state represents that the Buffer is bound to the slot.

A slot state of the mActiveBuffers is a NON-FREE state. The NON-FREE state is at least one of DEQUEUED, QUEUED, ACQUIRED, and SHARED.

The DEQUEUED state indicates that currently the slot is subjected to Dequeue by the BufferQueueProducer from the queue. However, in this case, the BufferQueueProducer still cannot fill or modify content of the Buffer until a previous consumer using the Buffer sends a Fence signal for releasing the Buffer. In this case, the Buffer belongs to the Buffer Queue Producer.

The QUEUED state represents that currently the Buffer is placed into the queue by the BufferQueueProducer by invoking a Queue method, and belongs to the BufferQueue. In this case, the Buffer described by the slot may be taken away by the BufferQueueConsumer.

ACQUIRED: After the Buffer is taken away from the queue by the BufferQueueConsumer by invoking an Acquire method, the state changes to the Acquired state. In this case, the BufferQueueConsumer cannot access content of the Buffer, until a related Fence signal is received.

Unused Slots is a set of Slots that are not used.

Binder mechanism: It is a cross-process communication mode based on a client server. The server registers with a service manager (Service Manager), and the client implements inter-process communication with a server side through by acquiring services.

A thread is a most basic running unit of a program. The thread does not exist alone but is included in a process, is a smallest unit participating in system scheduling, and is an actual running unit of the process. After an application is started, a process is created in a system. The process cannot be run, and instead, a thread in the process can be run. The process is merely a container, which includes information such as a data structure and an environment variable required for running the thread. A plurality of threads in a same process share all system resources in the process, such as a virtual address space, a file descriptor, and signal processing. However, the plurality of threads in the same process have respective call stacks (Call Stack), respective register contexts (Register Context), and respective thread-local storages (Thread-Local Storage). A thread refers to a control flow (i.e., an execution route or an execution flow) in a single sequence in the process. A plurality of threads may be created in a process, to implement concurrent running of the plurality of threads. Each thread executes a different task. For example, an application designs two tasks that need to be run concurrently, i.e., a task 1 and a task 2. The task 1 and the task 2 may be respectively placed into two threads, to implement concurrent running of the two tasks.

A virtual display, also referred to as a virtual screen, corresponds to a display screen of an electronic device, and is configured to perform virtual display of a GI. The virtual display is mainly configured to perform functions such as screen recording or screen projection. In embodiments of this application, creation and destruction of the virtual display are initiated by an App.

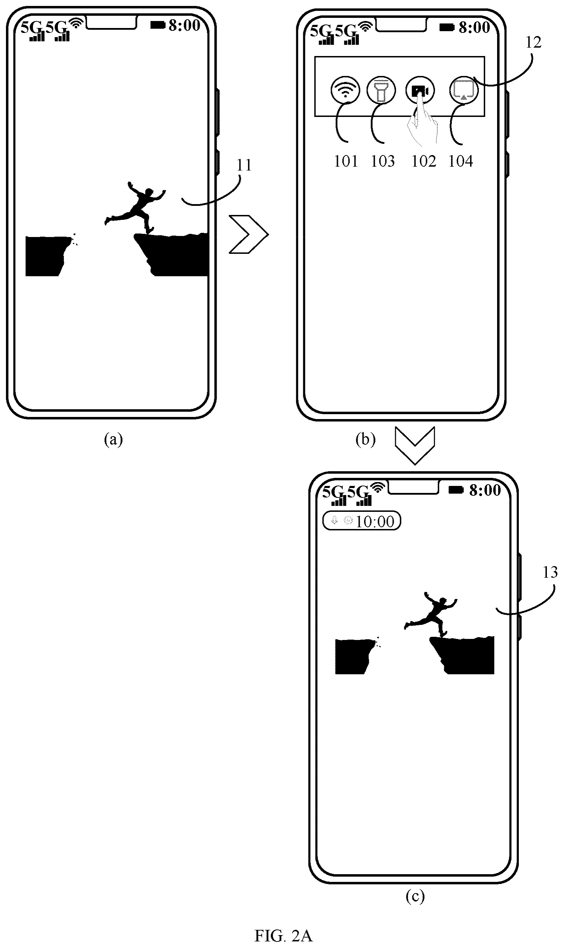

FIG. 2A is a schematic diagram of an application scenario of a virtual display according to an embodiment of this application.

As shown in (a) of FIG. 2A, a game interface 11 corresponding to a game App is run on a system foreground. During running of the game App, when a user wants to perform screen recording, the user may execute a pull-down operation to trigger the system to display a pull-down notification bar 12 including a "screen recording" button 102 shown in (b) of FIG. 2A.

It should be noted that (b) of FIG. 2A is merely an example for describing that the "screen recording" button may be arranged in the pull-down notification bar 12. During actual use, the "screen recording" button is not limited to be arranged in the pull-down notification bar. In addition, the pull-down notification bar may further include other functional buttons, such as a wireless network button 101, a flashlight switch button 103, and a screen projection button 104.

The user may perform a touch operation on the "screen recording" button 102. The touch operation may include but is not limited to a "click/tap operation", a "double click/tap operation", or a "touch and hold operation". After receiving touching performed by the user on the "screen recording" button in the pull-down notification bar, an electronic device performs recording, to obtain a recorded image 13 shown in (c) of FIG. 2A.

The recorded image is a composite GI. A specific composition manner is as follows:
A screen recording App initiates creation of a virtual display. After creating the virtual display, the screen recording App triggers an image processing process to composite an image of each frame. Specifically, a GI on the virtual display and a GI on a display interface of the electronic device are composited. The composite GI, i.e., the recorded image 13 in (c), is sent to a display interface of the electronic device for displaying, and is sent to the screen recording App. The screen recording App encodes the image for storage in a video format.

In actual use, a Media Recorder in an Android.media.API in an application architecture layer may be invoked. In other words, a multimedia creation interface in a media manager creates a data buffer area. The data buffer area is configured to receive a collected screen picture. Media Projection, i.e., a screen recording interface in the Android.media.API is invoked to create a virtual display Virtual Display. The Virtual Display is a mirror copy of a physical screen of the electronic device in an internal memory. The Virtual Display stores the collected screen picture in the data buffer area. The Media Recorder generates a video clip by integrating video encoding and recording of the screen picture in the data buffer area.

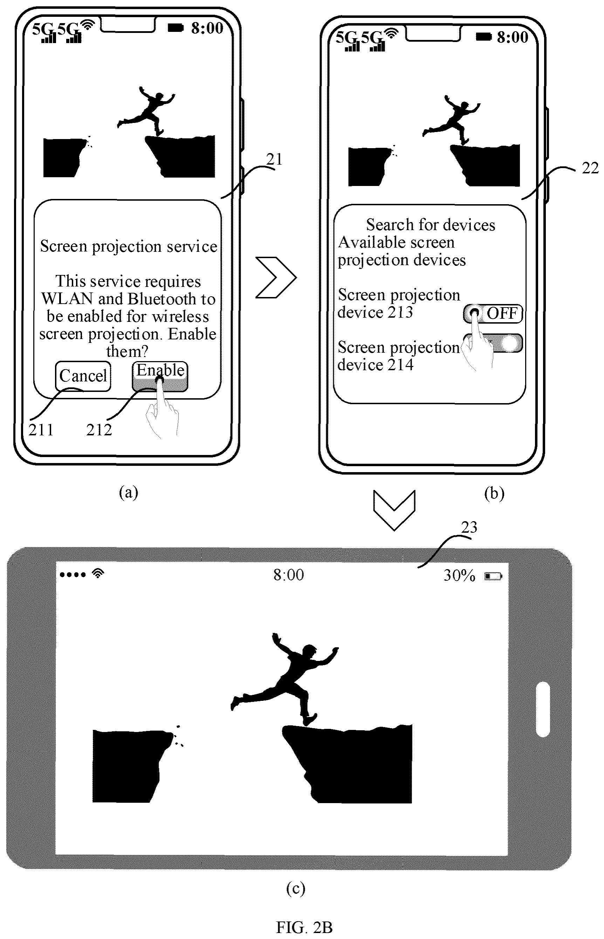

FIG. 2B is a schematic diagram of an application scenario of another virtual display according to an embodiment of this application.

For (b) of FIG. 2A, when the user performs a touch operation on the "screen projection" button 104, the touch operation may include but is not limited to a "click/tap operation", a "double click/tap operation", or a "touch and hold operation". The electronic device performs screen projection after receiving the touching performed by the "screen projection" button in the pull-down notification bar, to obtain a screen projection prompt interface 21 shown in (a) of FIG. 2B.

A prompt box prompts: Screen projection service: This service requires WLAN and Bluetooth to be enabled for wireless screen projection. Enable them? In addition, the screen projection service further includes a "cancel" button 211 and an "enable" button 212. The user may perform a touch operation on the "enable" button 212. The touch operation may include but is not limited to a "click/tap operation", a "double click/tap operation", or a "touch and hold operation".

After receiving the touching performed by the user on the "enable" button, the electronic device enters a screen projection device search interface 22, and finds an available screen projection device 213 through search. Then the user may click/tap "ON" on a switch button to turn on the screen projection device, so as to project a display interface 11 in (a) of FIG. 2A to a display interface of the screen projection device 213. A display interface 23 of the screen projection device 213 shown in (c) is obtained.

The projected screen picture is the composite GI. A specific composition manner is as follows:
A screen projection App initiates creation of a virtual display. After creating the virtual display, the screen projection App triggers an image processing process to composite an image of each frame. Specifically, a GI on the virtual display and a GI on a display interface of the electronic device are composited. The composite GI is sent to the display interface of the electronic device for displaying, and is displayed on the display interface 23 of the screen projection device 213 shown in (c).

In addition to the application scenarios of screen projection and screen recording shown in FIG. 2A and FIG. 2B, the virtual display may be further applied to other scenarios. An application scenario of the virtual display is not specifically limited in this application.

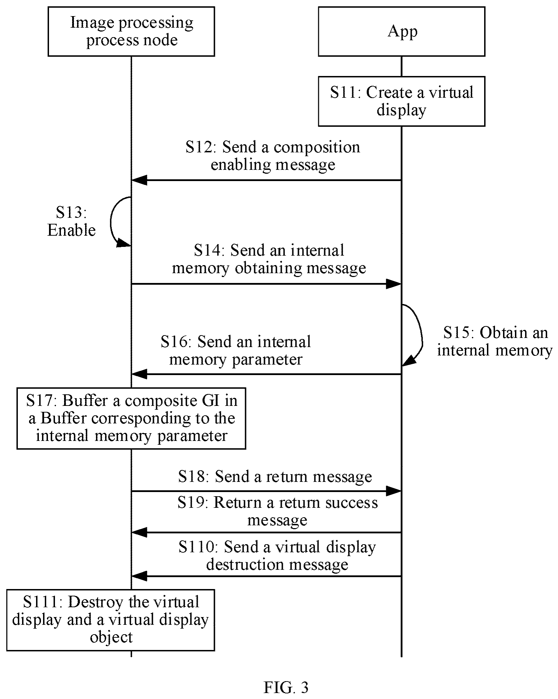

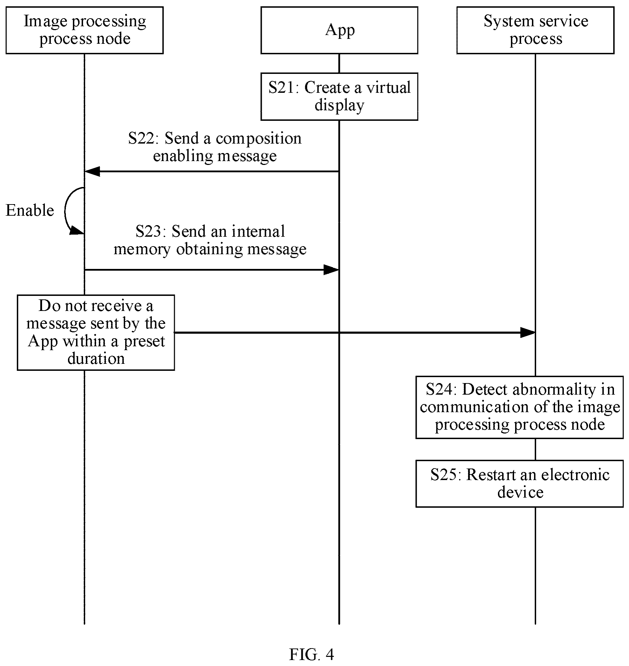

During virtual display recording, GI composition may be performed by using related solutions shown in FIG. 3 and FIG. 4.

FIG. 3 is an interaction diagram of a method for compositing a virtual display in a related solution. An App involved in FIG. 3 is located at an application layer of a software layer of the electronic device. An involved image processing process node is located in an application framework layer of the software layer of the electronic device.

The image processing process node is configured to invoke an image processing process, to implement a whole process such as layer rendering, composition, and presentation. The image processing process includes an image composition thread. A communication part in the image processing process configured to communicate with the App is located in the image composition thread.

S11: The App creates a virtual display.

S12: The App sends a composition enabling message to the image processing process node after the creation is completed.

The composition enabling message is a message generated after the App successfully creates the virtual display, which is used to cause the image processing process node to enable the image processing process, to perform layer rendering, composition, presentation, and the like.

S13: Enable the image processing process node.

After receiving the composition enabling message, the image processing process node enables the image processing process, and invokes the image composition thread to perform layer rendering, composition, and presentation.

S14: The image processing process node sends an internal memory obtaining message to the App.

The internal memory obtaining message indicates that the image processing process obtains an internal memory Buffer from the App, to buffer a composite GI in the Buffer. The Buffer exists in a BufferQueue in the App.

S15: The APP obtains an internal memory.

After receiving the internal memory obtaining message sent by the image processing process node, the APP obtains a Buffer configured to buffer the composite GI from the Buffer Queue.

S16: The App sends an internal memory parameter to the image processing process node.

The internal memory parameter is used to indicate a specified Buffer in the Buffer Queue of the App, for example, a slot parameter bound to the Buffer. In this way, the image processing process node may buffer the composite GI in the Buffer corresponding to the slot parameter through the slot parameter.

S17: The image processing process node buffers the composite GI in a Buffer corresponding to the internal memory parameter.

The image processing process node buffers the composite GI in the specified Buffer. In this case, the GI may be displayed on a virtual display corresponding to the App, and an operation corresponding to an application process may be performed based on a function, such as a screen projection function or a screen recording function, of the application process. For example, operations of image encoding into a video format corresponding to the screen projection function and storage may be performed.

S18: The image processing process node sends a return message to the App.

The return message is used to add the composite GI to the Buffer Queue of the App, to trigger the App to receive the composite GI for a subsequent operation.

S19: The App returns a return success message to the image processing process node.

After receiving the return message sent by the image processing process, the App modifies an internal memory state, generates a Buffer event object by using the composite GI, and adds the Buffer event object to the BufferQueue and then returns the return success message to the image processing process node.

GIs of other frames are composited based on steps S14 to S19, until the App initiates destruction of the virtual display.

S110: The App sends a virtual display destruction message to the image processing process node.

When a user closes an App that is being executed, or the App that is being executed is closed in another manner, the App initiates the destruction of the virtual display, and sends the virtual display destruction message to the image processing process node.

S111: The image processing process node destroys the virtual display and a virtual display object.

The virtual display object refers to a thread in the image processing process node configured to perform virtual display composition.

However, when the App does not respond in time, or the communication between the App and the image processing process node is abnormal, the image processing process may be blocked.

FIG. 4 is a schematic principle diagram of blocking of the image processing process in a related solution.

S21: The App creates a virtual display.

S22: The App sends a composition enabling message to the image processing process node after the creation is completed.

S23: The image processing process node sends an internal memory obtaining message to the App.

S24: A system service process node detects abnormality in communication of the image processing process node when the image processing process node does not receive a message sent by the App within a preset duration.

For example, the preset duration is 1s. Assuming that the image processing process node does not receive the message sent by the App within 1s, the system service process node detects abnormality in the communication of the image processing process node.

S25: The system service process restarts the electronic device.

After detecting the abnormality in the communication of the image processing process node, the system service process restarts the electronic device, and sends a restart instruction to the image processing process. The image processing process is started after the electronic device is restarted.

In the foregoing solution, the image processing process directly communicates with the App. When the App does not respond in time or the communication with the image processing process is abnormal, the image processing process is blocked, causing the display interface of the electronic device to be in a freezing screen state. In the freezing screen state, a user display interface is unresponsive to a trigger operation of the user, resulting in poor user experience.

In view of the foregoing problem, embodiments of this application provide a triggering method for a virtual display. A task thread of an image processing process is prevented from being blocked when the application process does not respond in time or the communication with the image processing process is abnormal, so that impact from the abnormality is controlled in the communication thread without spreading to other task threads. The communication thread is only configured to perform cross-process communication with the application process, and is not configured to perform GI composition of the display interface of the electronic device. Therefore, even if the communication thread is blocked, the GI composition of the display interface of the electronic device is not affected. However, the GI composition of the display interface of the electronic device is related to freezing screen of the display interface. When the GI composition of the display interface of the electronic device is normal, the display interface does not enter a freezing screen state. However, when the image processing process communicates with the application process by using a communication part of the image composition thread, when the application process does not respond in time, or the communication with the image processing process is abnormal, the communication part of the image processing process is blocked, and other threads of the image processing process are blocked, resulting in a failure of the GI composition of the display interface of the electronic device and GI composition of the virtual display. Based on the above, in this application, the communication thread in the image processing process is used to communicate with the application process, thereby effectively reducing impact from abnormality of a single application process on an underlying image processing process, resolving, to a specific extent, problems such as screen freezing of the display interface of the electronic device, and improving device stability and user experience.

To better describe a processing method for a virtual display provided in this application, an electronic device 100 in this embodiment of this application is first described.

In some embodiments, the electronic device 100 may be a wearable electronic device on which a virtual display needs to be created, such as a wearable sports watch, a wearable smart watch, a wearable bracelet, or a wearable audio headset. Alternatively, the electronic device may be a mobile phone, a notebook computer, a tablet computer, an augmented reality (augmented reality, AR) device, a virtual reality (virtual reality, VR) device, an on-board device, or the like. It should be noted that a specific type of the electronic device 100 is not specially limited in this embodiment of this application.

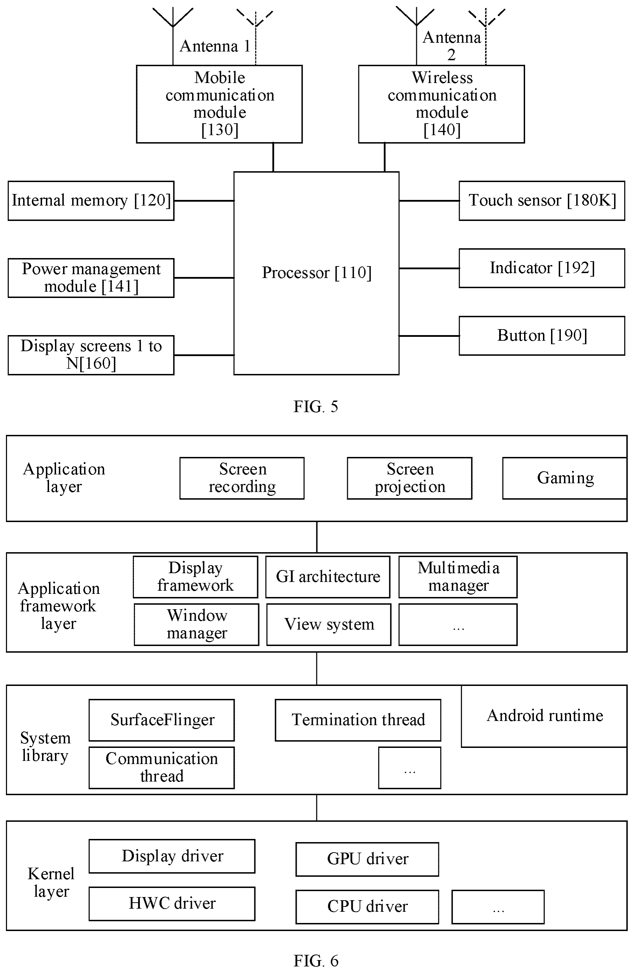

FIG. 5 is a schematic structural diagram of the electronic device 100 according to an embodiment of this application.

As shown in FIG. 5, the electronic device 100 may include a processor 110, an internal memory 120, an antenna 1, an antenna 2, a mobile communication module 130, a wireless communication module 140, a display screen 160, a touch sensor 180K, and the like.

It may be understood that the schematic structure in this embodiment constitutes no specific limitation on the electronic device. In some other embodiments, the electronic device may include more or fewer components than those shown in the figure, or some merged components, or some split components, or different component arrangements. The components shown in the figure may be implemented by hardware, software, or a combination of software and hardware.

The processor 110 may include one or more processing units. For example, the processor 110 may include an application processor (Application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be devices independent of each other, or may be integrated in one or more processors.

For example, in this application, the processor 110 may communicate with an application process by using a communication thread in an image processing process when the image processing process performs GI composition of a first frame, to obtain a communication result; send a composite GI to the application process for displaying on a virtual display created by the application process when the communication result is normal; and destroy the virtual display when the communication result is abnormal. When the application process does not respond in time or the communication with the image processing process is abnormal, the communication thread is blocked, but no impact is generated on other threads in the image processing process. The communication thread is only configured to perform cross-process communication with the application process, and is not configured to perform GI composition of a display interface of the electronic device. Therefore, even if the communication thread is blocked, the GI composition of the display interface of the electronic device is not affected. However, the GI composition of the display interface of the electronic device is related to freezing screen of the display interface. When the GI composition of the display interface of the electronic device is normal, the display interface does not enter a freezing screen state. However, when the image processing process communicates with the application process by using a communication part of the image composition thread, when the application process does not respond in time, or the communication of the image processing process is abnormal, the communication part is blocked, resulting in a failure of the GI composition of the display interface of the electronic device and GI composition of the virtual display in the image processing process. Based on the above, in this application, the communication thread in the image processing process is used to communicate with the application process, thereby resolving, to a specific extent, a problem of screen freezing of the display interface of the electronic device, and improving user experience. The controller may be a nerve center and command center of the electronic device. The controller may generate an operation control signal based on instruction operation code and a timing signal, and control instruction obtaining and instruction execution.

A memory may be further arranged in the processor 110, which is configured to store instructions and data. In some embodiments, the memory in the processor 110 is a cache memory. The memory may store instructions or data recently or cyclically used by the processor 110. If the processor 110 needs to use the instructions or the data again, the processor may directly invoke the instructions or the data from the memory. Repeated access is avoided, and waiting time of the processor 110 is reduced, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, and the like.

A wireless communication function of the electronic device may be implemented through the antenna 1, the antenna 2, the mobile communication module 130, the wireless communication module 140, the modem processor, and the baseband processor.

The antenna 1 and the antenna 2 are configured to send and receive an electromagnetic wave signal. Each antenna in the electronic device may be configured to cover one or more communication frequency bands. Different antennas may be further reused to improve a utilization rate of the antennas. For example, the antenna 1 may be reused as a diversity antenna of a wireless local area network. In some other embodiments, the antennas may be used in combination with a tuning switch.

The internal memory 120 may be configured to store computer-executable program code. The executable program code includes instructions. The processor 110 runs the instructions stored in the internal memory 120, to implement various functional applications and data processing of the electronic device. The internal memory 120 may include a program storage area and a data storage area. The program storage area may store an operating system, an application required for at least one function (for example, a sound playback function or an image playback function), and the like. The data storage area may store data (for example, audio data and an address book) and the like created during use of the electronic device. In addition, the internal memory 120 may include a high-speed random access memory, and may further include a non-volatile memory, for example, at least one magnetic disk storage device, a flash memory device, and a universal flash storage (universal flash storage, UFS). The processor 110 runs the instructions stored in the internal memory 120, and/or the instructions stored in the memory arranged in the processor, to perform various functional applications and data processing of the electronic device.

The display screen 160 of the electronic device may display a series of GI. These GIs are all home screens of the electronic device. Generally, a size of the display screen 160 of the electronic device is fixed, and only a limited number of controls may be displayed in the display screen 160 of the electronic device. A control is a GI element, which is a software component included in an application, and is configured to control all data processed by the application and interaction operations regarding the data. A user may interact with the control through direct manipulation (direct manipulation), so as to read or edit related information of the application. In general, the control may include visual interface elements such as an icon, a button, a menu, a tab, a text box, a dialog box, a status bar, a navigation bar, and a widget.

The touch sensor 180K is also referred to as a "touch device". The touch sensor 180K may be arranged on the display screen 194. The touch sensor 180K and the display screen 194 form a touch screen, which is also referred to as a "touch panel". The touch sensor 180K is configured to detect a touch operation performed on or near the touch sensor. The touch sensor may transfer the detected touch operation to the application processor to determine a touch event type. A visual output related to the touch operation may be provided by using the display screen 194. In some other embodiments, the touch sensor 180K may alternatively be arranged on a surface of the electronic device 100 at a position different from that of the display screen 194.

In addition, an operating system, for example, an iOS operating system, an Android open-source operating system, or a Windows operating system is run on the foregoing components. An application may be installed and run on the operating system.

The operating system of the electronic device may use a layered architecture, an event-driven architecture, a microcore architecture, a microservice architecture, or a cloud architecture. In this embodiment of this application, an Android system with a layered architecture is used as an example to describe a software structure of the electronic device.

FIG. 6 is a schematic diagram of a software structure of an electronic device according to an embodiment of this application. In this embodiment of this application, an Android system with a layered architecture is used as an example to describe a software structure of an electronic device 100.

In the layered architecture, software is divided into a plurality of layers, each layer having a clear role and task. The layers communicate with each other through a software interface. In some embodiments, the Android system is divided into four layers from top to bottom, i.e., an application (Applications, App) layer, a framework (Framework, FWK) layer, a system library layer, and a kernel (kernel) layer.

The application layer may include a series of application packages. In some embodiments, the application layer may be a screen recording App, a screen projection App, a game App, or the like.

The framework layer provides an application programming interface (Application Programming Interface, API) and a programming framework for applications at the application layer. The framework layer may include some predefined functions. In some specific implementations, the framework layer may include a GI architecture and a display framework. Specifically, a framework corresponding to the processing method for a virtual display provided in the embodiments of this application is saved in the display framework of the application framework layer. A GI drawing thread is located in a GI architecture.

Optionally, an image processing process node is located in the display framework, and is configured to perform layer rendering, composition, and presentation. The image processing process node is configured to invoke an image processing process. The image processing process includes at least one thread. Optionally, the image processing process provided in this embodiment of this application includes an image composition thread, a communication thread, a termination thread, and the like.

Optionally, the image composition thread is configured to perform GI composition on a virtual display and GI composition on a display interface of the electronic device. The communication thread is configured to communicate with an App and synchronize an obtained result signal to the image composition thread. The termination thread is configured to terminate the communication thread.

Optionally, the application framework layer includes a window manager, a multimedia manager, a view system, and the like.

The window manager is configured to manage a window program. The window manager may obtain a size of a display screen, determine whether a status bar exits, lock a screen, take a screenshot, send interface information display instructions to the view system, and the like.

The view system includes visual controls such as a control configured to display a text and a control configured to display a picture. The view system may be configured to build an App. The display interface may be composed of one or more views. The view system may further invoke a display driver of a display screen of a corresponding electronic device based on a display interface display instruction sent by the window manager, and drive a first display screen to display the interface information through a display driver.

The multimedia manager is configured to manage a multimedia invoking interface. The invoking interface includes but is not limited to a Media Recorder, i.e., a multimedia creation interface, and a Media Projection, i.e., a screen recording interface. The Media Recorder in the multimedia manager is configured to create a data buffer area. The Media Projection is configured to create a Virtual Display. The Virtual Display is a virtual reality display of the display screen of the electronic device in an internal memory, i.e., a virtual display, and is configured to perform mirror copying on the display screen. The Virtual Display stores a collected screen picture to the data buffer area, and then the Media Recorder generates a video clip from the screen picture in the data buffer area.

The system library may include a plurality of functional modules. In some specific implementations, the system library layer includes functional modules such as a SurfaceFlinger, a communication thread, and a termination thread.

The SurfaceFlinger is used for functions such as layer creation, control, and management. The communication thread is configured to communicate with the App, and the termination thread is configured to terminate the communication thread.

The kernel layer is responsible for managing a thread, an internal memory, a device driver, a file, and a network system of a system, which defines performance and stability of the system. In some specific implementations, the kernel layer includes a hardware driver layer, for example, a display driver, a GPU driver, an HWC driver, or a CPU driver.

It should be noted that although this embodiment of this application is described using the Android system as an example, a basic principle is also applicable to the electronic device 100 based on operating systems such as iOS and Windows.

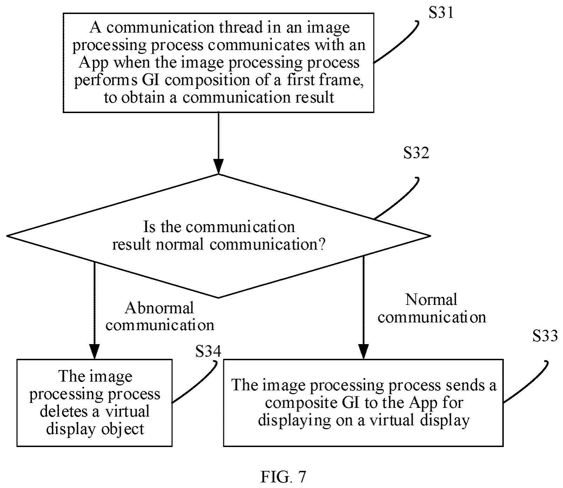

FIG. 7 is a flowchart of a processing method for a virtual display according to an embodiment of this application.

As shown in FIG. 7, the method includes an image processing process and an App. The image processing process includes a communication thread. The method specifically includes the following steps:
S31: The communication thread in the image processing process communicates with the App when the image processing process performs GI composition of a first frame, to obtain a communication result.

In this embodiment of this application, the first frame is a current frame. That the image processing process performs the GI composition of the first frame means that the image processing process performs GI composition of the current frame.

Optionally, the image processing process is a SurfaceFlinger process.

The communication thread is a thread in the image processing process configured to communicate with the App. In this embodiment of this application, an independent communication thread is created to perform cross-process communication with the App. When the App does not respond in time, or the cross-process communication is blocked, only the communication thread of the image processing process is blocked, and other threads, for example, an image composition thread of a display screen of an electronic device is not blocked. In this way, a problem of screen freezing caused by blocking of the image composition thread on a display interface of the electronic device is avoided.

Optionally, the communication thread may be a communication thread simultaneously created in the image processing process when the App creates the virtual display. In addition, when creating the virtual display, the App further creates a virtual display object in the image processing process. The virtual display object is configured to maintain a correspondence between the virtual display and the communication thread. In this way, when functions of the App do not involve the virtual display, the virtual display is not created, which saves an internal memory to a specific extent and improves GI composition efficiency.

Optionally, a Binder mechanism may be selected for the cross-process communication between the App and the communication thread. Compared with other cross-process transmission mechanisms, the Binder mechanism needs to be copied only once, which has a higher transmission speed, and is more secure and easy to use.

S32: Determine whether the communication result is normal communication, where if the communication is abnormal, S33 is performed, or if the communication is normal, S34 is performed.

In this embodiment of this application, the communication result refers to a situation of the cross-process communication between the App and the communication thread, including two situations, i.e., normal communication and abnormal communication.

The normal communication means normal communication between the App and the communication thread. In this embodiment of this application, the normal communication means that the image processing process receives a message sent by the App within a preset time. For example, the image processing process receives an internal memory obtaining success message sent by the App within 1s, or receives a return success message within 1s.

The abnormal communication refers to abnormal communication between the App and the communication thread. In this embodiment of this application, the abnormal communication means to that the image processing process does not receive a message sent by the App within a preset time. For example, the image processing process does not receive a message sent by any App within 1s. In this embodiment of this application, the abnormal communication means that the App does not respond in time or the communication between the App and the image processing process is abnormal.

If the image processing process does not receive the message sent by the App within the preset time, it indicates that the communication is abnormal, or otherwise, it indicates that the communication is normal.

S33: The image processing process deletes the virtual display object.

The virtual display object refers to content such as a thread related to virtual display composition that exists in the image processing process, for example, a GI composition part on the virtual display in the image composition thread or the communication thread.

When the communication is abnormal, the cross-process communication blocks the communication thread. In this case, the GI composition part on the virtual display cannot be normally executed. To achieve normal execution of the GI composition on the display interface of the electronic device, the virtual display object is deleted. For example, the GI composition part on the virtual display in the image composition thread and/or the communication thread is deleted.

S34: The image processing process sends a composite GI to the App for displaying on the virtual display.

When the communication normal, the image processing process sends the composite GI to the App for displaying on a virtual display of an application process.

Optionally, the composite GI is sent to the application process after the application process turns to a screen recording process, so that the application process encodes the composite GI into a video format for storage.

Optionally, the composite GI is sent to the application process after the application process turns to a screen projection process, so that the application process sends the composite GI to a screen projection device for displaying.

According to the processing method for a virtual display provided in this embodiment of this application, a task thread of the image processing process is prevented from being blocked when the application process does not respond in time or the communication with the image processing process is abnormal, so that impact from the abnormality is controlled in the communication thread without spreading to other task threads. The communication thread is only configured to perform cross-process communication with the application process, and is not configured to perform GI composition of the display interface of the electronic device. Therefore, even if the communication thread is blocked, the GI composition of the display interface of the electronic device is not affected. However, the GI composition of the display interface of the electronic device is related to freezing screen of the display interface. When the GI composition of the display interface of the electronic device is normal, the display interface does not enter a freezing screen state. However, when the image processing process communicates with the application process by using a communication part of the image composition thread, when the application process does not respond in time, or the communication with the image processing process is abnormal, the communication part of the image processing process is blocked, and other threads of the image processing process are blocked, resulting in a failure of the GI composition of the display interface of the electronic device and GI composition of the virtual display. Based on the above, in this application, the communication thread in the image processing process is used to communicate with the application process, thereby effectively reducing impact from abnormality of a single application process on an underlying image processing process, resolving, to a specific extent, problems such as screen freezing of the display interface of the electronic device, and improving device stability and user experience.

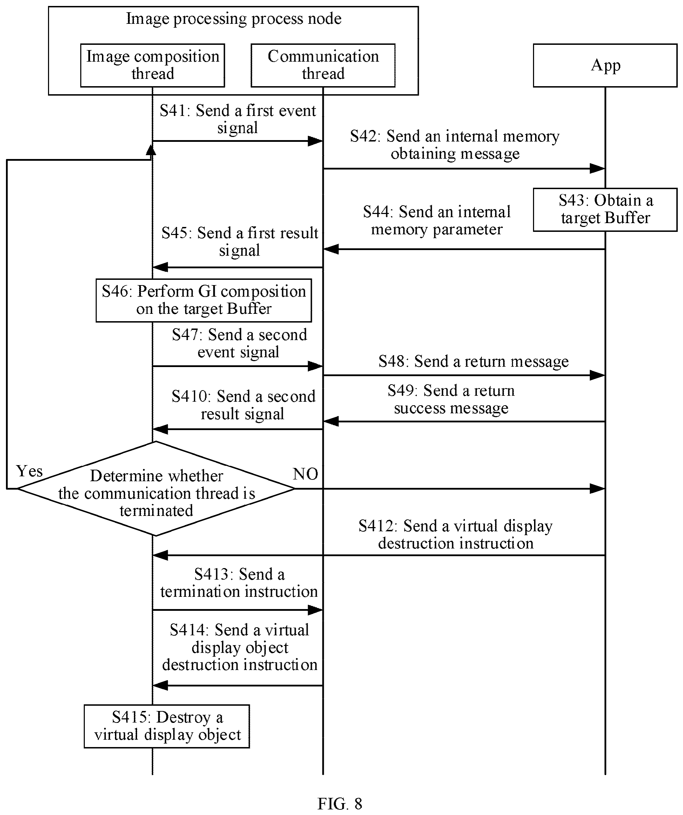

FIG. 8 is an interaction diagram of a method for compositing a virtual display according to an embodiment of this application. The method is described by using an example in which the image processing process is a SurfaceFlinger process. A SurfaceFlinger process node involved in the method is configured to implement the SurfaceFlinger process. The SurfaceFlinger process includes an image composition thread, a communication thread, a termination thread, and the like. The image composition thread is configured to implement GI composition on a display interface of an electronic device and GI composition on a virtual display.

When creating the virtual display, an APP correspondingly creates a communication thread in the SurfaceFlinger process, and creates a virtual display object, and then performs the following operations.

In this embodiment of this application, the communication thread is configured to implement communication between the SurfaceFlinger process and the App, and includes at least a first sub-thread and a second sub-thread.

The first sub-thread is configured to obtain an internal memory parameter from the App, and the second sub-thread is configured to return the internal memory parameter of the App.

S41: The image composition thread in the SurfaceFlinger process node sends a first event signal to the communication thread.

The first event signal refers to a signal used to trigger the communication thread to specify an internal memory from the App to buffer a composite GI. In this embodiment of this application, the first event signal refers to a signal obtained when the SurfaceFlinger process starts to perform composition of a frame, and is used to trigger the communication thread to determine the specified internal memory, i.e., a target Buffer, from the App. For example, the first event signal is a signal used to trigger the communication thread to invoke DequeueBuffer().

To make the target Buffer specified by the communication thread satisfy an internal memory size required for compositing the virtual display, the first event signal may preset a width, a height, and a pixel format of the target Buffer. The App obtains a corresponding target Buffer based on the preset width, height, and pixel format.

Because the communication thread includes a plurality of sub-threads, to accurately invoke the first sub-thread of the communication thread, the first event signal may carry a first mark.

The first mark is a preset identifier, which may be a letter, a number, or another identifier. The first mark corresponds to the first sub-thread. When the first event signal carries the first mark, the communication thread invokes the first sub-thread, to determine the target Buffer from the App. For example, the first mark is DequeueBuffer, which is used to trigger the communication thread to invoke the first sub-thread DequeueBuffer(), to determine the target Buffer from the application App.

S42: The communication thread sends an internal memory obtaining message to the App.

After receiving the first event signal sent by the image composition thread, the communication thread sends the internal memory obtaining message to the App. The internal memory obtaining message is used to specify the target Buffer from a Buffer Queue of the App.

The internal memory obtaining message includes at least an App identity identifier and an internal memory obtaining instruction.

The App identity identifier is used to represent a unique corresponding App. A software program layer of the electronic device includes a plurality of Apps. Therefore, the communication thread may find a desired App from the plurality of Apps based on the App identity identifier.

The internal memory obtaining instruction is used to trigger the App to determine the target Buffer from Buffer Queue. Optionally, the internal memory obtaining instruction may be invoking the DequeueBuffer(), which is used to cause the Buffer Queue of the App to release the target Buffer.

The DequeueBuffer() specifies an internal memory obtaining sequence. The target Buffer is preferentially determined from a slot bound to the internal memory. In this way, determining efficiency can be improved.

To make the target Buffer determined by the communication thread satisfy an internal memory requirement for compositing the virtual display, the internal memory obtaining instruction may further carry the width, the height, and the pixel format specified by the first event signal. The App may determine the target Buffer from the Buffer Queue based on the width, the height, and the pixel format specified by the first event signal.

Optionally, the communication thread may send the internal memory obtaining message to the App through a Binder mechanism. Compared with other transmission mechanisms, the Binder mechanism needs to be copied only once, which is faster, more secure, and easier to use.

S43: The App obtains a target Buffer.

The App determines the target Buffer from the Buffer Queue based on the internal memory obtaining instruction in the received internal memory obtaining message.

When the internal memory obtaining instruction is invoking the DequeueBuffer(), a slot is preferentially obtained from mFreeBuffers, and a Bufferslot state corresponding to the slot is modified from FREE to DEQUEUED. Because the slot in the mFreeBuffers is already connected to the Buffer, there is no need to reallocate a Buffer to the slot, thereby improving an obtaining speed.

In addition, if the mFreeBuffers is null, the slot is obtained from the mFreeSlots, a Buffer is allocated to the slot, and a Bufferslot state is modified from FREE to DEQUEUED.

The foregoing mFreeSlots is a slot set having a BufferSlot structure being FREE and to which no Buffer is bound. The mFreeBuffers is a slot set with a BufferSlot structure of FREE and to which Buffer is bound.

A target Buffer corresponding to the requirement is determined from the Buffer Queue when the internal memory obtaining instruction carries the width, the height, and the pixel format that are specified by the first event signal.

S44: The App sends the internal memory parameter corresponding to the target Buffer to the communication thread.

The internal memory parameter is used to specify the target Buffer. In other words, internal memory parameters are in one-to-one correspondence with Buffers in the Buffer Queue, and different Buffers correspond to different internal memory parameters.

In this embodiment of this application, the App sends the internal memory parameter corresponding to the target Buffer to the communication thread, so that the communication thread synchronizes the internal memory parameter to the image composition thread.

Optionally, when the internal memory obtaining instruction is DequeueBuffer(), the App allocates the obtained slot as an output parameter to the communication thread. The slot is bound to the specified Buffer.

Optionally, if the target Buffer bound to the slot is reallocated, the communication thread receives a return value indicating a BUFFER_NEEDS_REALLOCATION state sent by the APP. Otherwise, an NO_ERROR state is returned. In this way, the communication thread may determine a subsequent processing manner based on the return value.

If the return value is the BUFFER_NEEDS_REALLOCATION state, the communication thread needs to send a new pointer obtaining message to the App, for example, send a RequestBuffer, obtain a target Buffer pointer from the App, and then perform a subsequent operation.

If the return value is No_ERROR, the communication thread directly performs the subsequent operation.

Optionally, the App sends a message to the communication thread through the Binder mechanism, including the internal memory obtaining message, the internal memory parameter, and/or the new pointer obtaining message.

S45: The communication thread sends a first result signal to the SurfaceFlinger.

In this embodiment of this application, the first result signal refers to a result signal triggered after the communication thread receives the internal memory parameter sent by the App, which is used to indicate that the SurfaceFlinger process may perform a composition operation on the target Buffer specified from the BufferQueue. The first result signal includes the internal memory parameter.

Optionally, the first result signal may include the width, the height, and the pixel format of the target Buffer, so that the image composition thread determines that whether composition can be completed based on the width, the height, and the pixel format of the Buffer in the first result signal. It should be understood that when the width, the height, and the pixel format of the Buffer do not satisfy requirements, for example, the width is less than the width set by the first event signal, the height is less than the height set by the first event signal, or the pixel format is inconsistent with the pixel format set by the first event signal, the SurfaceFlinger process cannot composite a composition result on the target Buffer.

Further, to composite the virtual display of the SurfaceFlinger on the specified target Buffer, the first result signal includes a Buffer pointer. The Buffer pointer uniquely determines the target Buffer. In this case, after finding the target Buffer based on the Buffer pointer, the SurfaceFlinger process composites the GI on the virtual display on the target Buffer.

S46: The image composition thread performs GI composition on the target Buffer.

After receiving the first result signal sent by the communication thread, the image composition thread performs layer composition, and composites the composition result on the specified target Buffer.

The image composition thread includes hardware compositor (Hardware Composer, HWC) composition and/or GPU composition.

The HWC is a dedicated image processing device, which is configured to perform layer composition and display. The HWC may be an independent device, or may be integrated in a system level chip. The HWC composition is a layer composition method of compositing display data of a layer through an HWC.

A GPU is a general-purpose image processing device. In addition to layer composition, the GPU is further configured to complete other graphic processing tasks. The GPU composition is a layer composition method of compositing display data of a layer through a GPU.

During actual use, the SurfaceFlinger process sends a layer parameter of a rendered layer to the HWC, and the HWC annotates the rendered layer based on a processing capability thereof. When a number of rendered layers is greater than a maximum number of layers that can be composited by the HWC, a part is annotated as GPU composition, and an other part is annotated as HWC composition. The electronic device first invokes the GPU to composite a layer annotated as GPU composition to obtain a GPU composition layer, then composites the GPU composition layer and a layer annotated as HWC composition to obtain an HWC composition layer, and composites the HWC composition layer on the target Buffer, to complete composition processing of a frame.

Optionally, when the first result signal includes the width, the height, and the pixel format of the target Buffer, the SurfaceFlinger may first determine whether the obtained Buffer satisfies a composition requirement based on the first result signal. If the composition requirement is satisfied, the SurfaceFlinger performs composition. If the composition requirement is not satisfied, the SurfaceFlinger re-performs steps S41 to S46 until the composition requirement is satisfied, and then performs S47.

S47: The image composition thread sends a second event signal to the communication thread.

The second event signal refers to an event signal indicating returning the internal memory parameter to the App. In this embodiment of this application, the signal obtained after the SurfaceFlinger process completes the composition of a frame is used to trigger the communication thread to return the internal memory parameter to the App. For example, the second event signal is invoking the QueueBuffer().

Because the communication thread includes a plurality of sub-threads, to accurately invoke the second sub-thread of the communication thread, the second event signal may carry a second mark.

The second mark is a preset identifier, which may be a letter, a number, or another identifier. The second mark corresponds to the second sub-thread. When the second event signal carries the second mark, the communication thread invokes the second sub-thread, to return the internal memory parameter to the App. For example, the second mark is a QueueBuffer, which is used to trigger the communication thread to invoke a second sub-thread QueueBuffer(), to return the internal memory parameter to the Buffer Queue of the APP.

S48: The communication thread sends a return message to the App.

The return message includes an App identity identifier, a return instruction, and a second Buffer.

The App identity identifier is used to represent a unique corresponding App. A software program layer of the electronic device includes a plurality of Apps. Therefore, the communication thread may find a desired App from the plurality of Apps based on the App identity identifier.

The return instruction is used to trigger the App to perform the subsequent operation.

Optionally, the second sub-thread is a QueueBuffer(), and the internal memory may be returned to the App through the QueueBuffer(). The QueueBuffer() is specifically implemented as follows:
The QueueBuffer() modifies the Bufferslot state corresponding to the slot from DEQUEUED to QUEUED based on a slot parameter corresponding to the Buffer, generates a Buffer event object based on Bufferslot information, and adds the Buffer event object to the Buffer Queue.

Optionally, the communication thread sends the return message to the App through the Binder mechanism.

S49: The App sends a return success message to the communication thread.

After receiving the internal memory parameter corresponding to the target Buffer returned by the communication thread, the App sends the return success message to the communication thread.

The return success message is used to indicate that the internal memory parameter corresponding to the target Buffer is successfully returned, and may be a letter, a number, or another mark that can identify the return success. For example, the return success message is Queue Buffer success.

Optionally, the App sends a return success instruction to the communication thread through the Binder mechanism.

S410: The communication thread sends a second result signal to the image composition thread.

In this embodiment of this application, the second result signal refers to a result signal triggered after the communication thread receives the return success message sent by the App, which is used to notify the image composition thread that the internal memory parameter of the target Buffer is successfully returned.

S411: Determine whether the communication thread is terminated. If so, S41 is performed, or if not, S412 is performed.

S412: After the App initiates destruction of the virtual display, the App sends a virtual display destruction instruction to the image composition thread of the SurfaceFlinger process node.

The virtual display destruction instruction is used to cause an image composition thread process in the SurfaceFlinger to destroy the virtual display object, and the SurfaceFlinger does not perform a virtual display composition operation.

Optionally, when an App termination operation is performed, the App initiates the destruction of the virtual display. The App termination operation may be closing the App. For example, the App is automatically terminated when a running time reaches a preset duration, or a space is closed by click/tap, or the App is automatically closed through a language or a gesture.

Optionally, if a system service process detects a failure of an application process, in other words, closing of the App, the system service process sends a close instruction to the application process, to close the application process.

S413: The image composition thread sends a termination instruction to the communication thread.

After receiving the virtual display object destruction instruction sent by the App, the image composition thread sends the termination instruction to the communication thread. The termination instruction is used to cause the image composition thread to destroy the virtual display object, in other words, terminates the communication thread and deletes the virtual display object. In this case, the communication thread no longer occupies an internal memory of the electronic device, and does not affect next virtual display composition.

S414: The communication thread sends a virtual display object destruction instruction to the image composition thread.

S415: The image composition thread destroys the virtual display object.

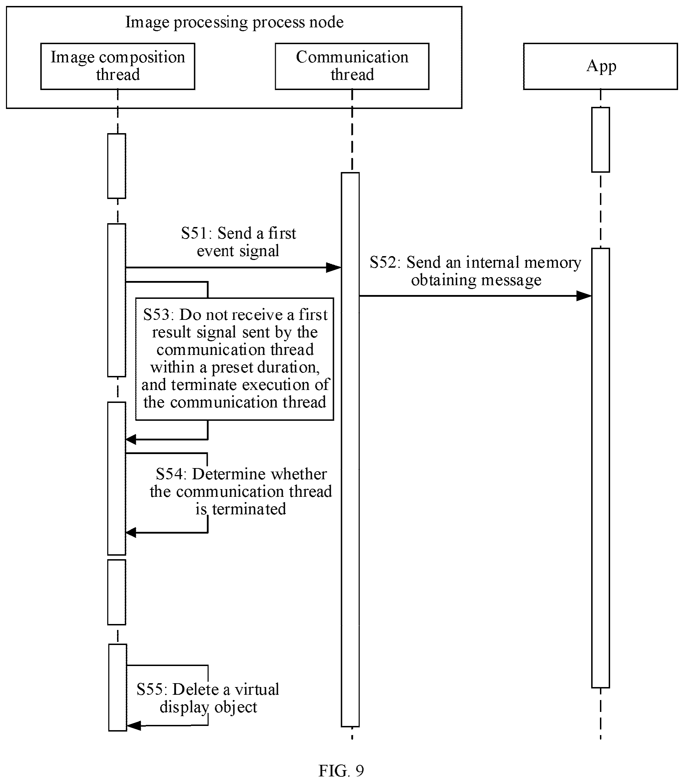

When the App does not respond in time to a communication request of the SurfaceFlinger, or abnormal communication occurs, an interaction method shown in FIG. 9 is performed.

FIG. 9 is an interaction diagram of a virtual display composition fault according to an embodiment of this application.

A SurfaceFlinger process performs composition of a first frame.

S51: An image composition thread sends a first event signal to a communication thread.

S52: The communication thread sends internal memory obtaining information to an App.

This step is the same as steps S31 to S32, and therefore is not described in detail herein.

S53: The image composition thread does not receive a first result signal sent by the communication thread within a preset duration, and terminates execution of the communication thread.

In this embodiment of this application, because the App does not respond in time to a communication request sent by the communication thread, or communication with the communication thread is abnormal, the image composition thread does not receive the first result signal sent by the communication thread within the preset duration. In this case, it is determined that a current virtual display fails, and the image composition thread creates a termination thread, to terminate the communication thread, in other words, to stop invoking the communication thread.

The preset duration is a duration set by a person skilled in the art based on experience, for example, is 1s. The image composition thread does not receive the first result signal sent by the communication thread within 1s.

The SurfaceFlinger directly performs composition of a second frame. The second frame is a next frame of the first frame.

Although the virtual display fails, the image composition thread further performs a GI composition operation on a display interface of an electronic device. In this way, the display interface of the electronic device can be prevented from staying still as a result of the image composition thread being blocked, and visual experience of a user is improved to a specific extent.

S54: The SurfaceFlinger determines that whether the communication thread is terminated. If so, S55 is performed.

In this embodiment of this application, the SurfaceFlinger monitors a running state of the communication thread. When it is detected that the communication thread is not running, for example, it is detected that the running state of the communication thread is a FALSE state, the communication thread is terminated.

If it is detected that the communication thread is always in the running state, the communication thread is not terminated. The SurfaceFlinger further composites the second frame. After the composition of the second frame is completed, a third frame is composited. During the composition of the third frame, it is further determined whether the communication thread is terminated. If the communication thread is not terminated, the composition is further performed. During composition of a fourth frame, it is further determined whether the communication thread is terminated. The foregoing operation is repeated until the communication thread is terminated.

In this embodiment of this application, a termination condition for the communication thread is as follows: A system server detects that the App has failed, and sends a process termination instruction to the App. The App receives the process termination instruction and sends an internal memory obtaining instruction failure instruction to the communication thread. The communication thread receives the internal memory obtaining instruction failure instruction, and the communication thread is terminated.

S55: The SurfaceFlinger process deletes a virtual display object.

A virtual display composition fault provided in this embodiment of this application means that the App does not respond in time to the communication request sent by the communication thread, or the communication with the communication thread is abnormal. Although the virtual display has failed, the SurfaceFlinger further performs a composition operation. In this way, the display interface of the electronic device can be prevented from staying still as a result of the SurfaceFlinger being blocked, and visual experience of a user is improved to a specific extent.

The technical solutions of the embodiments essentially, or a part contributing to the related art, or all or some of the technical solutions may be implemented in a form of a software product. The computer software product is stored in a storage medium, and includes a plurality of instructions for enabling a computer device (which may be a personal computer, a server, a network device, or the like) or a processor to perform all or some of the operations of the method in the embodiments. The foregoing storage medium includes any medium that can store program code, such as a flash memory, a removable hard disk, a read-only memory, a random access memory, a disk, or a compact disc.

The foregoing descriptions are merely specific embodiments of this application, and are not intended to limit the protection scope of this application. Any variation or replacement made within the technical scope disclosed in this application shall fall within the protection scope of this application. Therefore, the protection scope of this application shall be subject to the protection scope of the claims.

## Claims

1. A processing method for a virtual display, comprising:
communicating with an application process by using a communication thread in an image processing process when the image processing process performs image interface GI composition of a first frame, to obtain a communication result, wherein the communication result comprises normal communication and abnormal communication, and the normal communication indicates that the image processing process receives a message sent by the application process within a preset time; and
deleting a virtual display object in the image processing process when the communication result is the abnormal communication, and sending a composite GI to the virtual display created by the application process when the communication result is the normal communication.

2. The method according to claim 1, wherein the communicating with an application process by using a communication thread in an image processing process, to obtain a communication result comprises:
sending an internal memory obtaining message to the application process by using the communication thread when an image composition thread in the image processing process sends a first event signal to the communication thread, wherein the internal memory obtaining message is used to determine an internal memory, and the internal memory is configured to buffer the composite GI;
determining that the communication result is the normal communication when the communication thread receives an internal memory parameter sent by the application process within the preset time, and sends a first result signal to the image composition thread, wherein the internal memory parameter is used to specify the internal memory; and
determining that the communication result is the abnormal communication when the communication thread does not receive the internal memory parameter sent by the application process within the preset time.

3. The method according to claim 2, wherein the internal memory obtaining message is DequeueBuffer() when the first event signal is an event signal with a mark DequeueBuffer.

4. The method according to claim 2 or 3, wherein the internal memory obtaining message further comprises an internal memory size and a pixel format.

5. The method according to any one of claims 2 to 4, wherein the sending a composite GI to the application process when the communication result is the normal communication comprises:
buffering the composite GI in the internal memory and sending a second event signal to the communication thread when the communication result is the normal communication;
sending a return message to the application process by using the communication thread in response to the communication thread receiving the second event signal; and
determining to buffer the composite GI in the internal memory after the communication thread receives a return success message sent by the application process and sends a second result signal to the image composition thread.

6. The method according to any one of claims 1 to 5, further comprising:
destroying the virtual display object when it is determined that the communication thread is terminated after the GI is composite by the image processing process.

7. The method according to claim 5 or 6, wherein the second event signal is an event signal with a mark QueueBuffer, and the return message is QueueBuffer().

8. The method according to any one of claims 2 to 7, wherein the deleting a virtual display object in the image processing process when the communication result is the abnormal communication comprises:
constructing a termination thread and starting GI composition of a second frame when abnormal communication occurs, wherein the termination thread is configured to terminate the communication thread, and the second frame is a next frame of the first frame; and
determining whether the communication thread is terminated, starting GI composition of a third frame when it is determined that the communication thread is not terminated, redetermining whether the communication thread is terminated, wherein the third frame is a next frame of the second frame, repeating the operation until it is determined that the communication thread is terminated, and deleting the virtual display object.

9. The method according to claim 8, wherein that it is determined that the communication thread is terminated comprises:
determining that the communication thread is terminated when a failure instruction of the internal memory obtaining message sent by the application process is received by using the communication thread when a system service process sends a closing instruction to the application process to close the application process in response to detecting that the application process has failed.

10. The method according to any one of claims 1 to 9, further comprising:
creating the communication thread in the image processing process when the application process creates the virtual display, and creating the virtual display object, to maintain a correspondence between the virtual display and the communication thread.

11. The method according to claim 10, wherein the destroying the virtual display comprises:
terminating the communication thread, and destroying the virtual display object.

12. The method according to any one of claims 1 to 11, wherein after the sending a composite GI to the application process, the method further comprises:
sending the composite GI to the application process after the application process turns to a screen recording process, so that the application process encodes the composite GI into a video format for storage; and
sending the composite GI to the application process after the application process turns to a screen projection process, so that the application process sends the composite GI to a screen projection device for displaying.

13. The method according to any one of claims 1 to 12, wherein the communicating with an application process by using a communication thread in an image processing process comprises:
communicating with the application process by using the communication thread based on a Binder mechanism.

14. An electronic device, comprising a memory and a processor, wherein the memory is coupled to the processor; and
the memory has a program stored therein, and the program, when executed by the processor, causes the electronic device to perform the method according to any one of claims 1 to 13.
